(19) Europäisches Patentamt
European Patent Office
Office européen des brevets

(11) **EP 3 951 977 B1**

(12) **EUROPEAN PATENT SPECIFICATION**

(45) Date of publication and mention of the grant of the patent:
**03.05.2023 Bulletin 2023/18**

(21) Application number: **20886002.3**

(22) Date of filing: **29.10.2020**

(51) International Patent Classification (IPC):
*H01M 4/131* (2010.01)   *H01M 10/0525* (2010.01)
*H01M 10/058* (2010.01)   *H01M 50/134* (2021.01)
*H01M 10/42* (2006.01)   *H01M 4/02* (2006.01)
*H01M 10/0587* (2010.01)

(52) Cooperative Patent Classification (CPC):
**H01M 4/131; H01M 10/0525; H01M 10/058;**
**H01M 50/134;** H01M 10/0587; H01M 2004/021;
H01M 2010/4292; H01M 2220/20; Y02E 60/10;
Y02P 70/50

(86) International application number:
**PCT/CN2020/124951**

(87) International publication number:
**WO 2021/088718 (14.05.2021 Gazette 2021/19)**

(54) **SECONDARY BATTERY, AND BATTERY MODULE, BATTERY PACK AND DEVICE CONTAINING SAME**

SEKUNDÄRBATTERIE UND BATTERIEMODUL, BATTERIEPACK UND VORRICHTUNG DAMIT

BATTERIE SECONDAIRE ET MODULE DE BATTERIE, BLOC-BATTERIE ET DISPOSITIF LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **06.11.2019   CN 201911075791**

(43) Date of publication of application:
**09.02.2022   Bulletin 2022/06**

(73) Proprietor: **Contemporary Amperex Technology Co., Limited**
**Ningde City, Fujian 352100 (CN)**

(72) Inventors:
• **WANG, Guangjun**
**Ningde**
**Fujian 352100 (CN)**
• **ZHANG, Chenchen**
**Ningde**
**Fujian 352100 (CN)**
• **LUO, Dongsheng**
**Ningde**
**Fujian 352100 (CN)**
• **LAN, Yueying**
**Ningde**
**Fujian 352100 (CN)**

(74) Representative: **Boult Wade Tennant LLP**
**Salisbury Square House**
**8 Salisbury Square**
**London EC4Y 8AP (GB)**

(56) References cited:
EP-A1- 1 840 987     EP-A1- 3 220 446
EP-A2- 2 824 735     WO-A1-2014/064499
CN-A- 105 406 084     CN-A- 109 659 614
CN-A- 109 659 614     CN-A- 109 687 009
CN-A- 109 860 600     CN-A- 109 888 266
US-A1- 2013 314 051     US-A1- 2015 171 414
US-A1- 2016 072 125     US-A1- 2016 351 892

## Description

### TECHNICAL FIELD

The present application belongs to the field of electrochemical technology. More specifically, the present application relates to a secondary battery and a battery module, battery pack, and apparatus containing the same.

### BACKGROUND

As a new type of high-voltage, high-energy density rechargeable battery, secondary batteries have outstanding characteristics such as light weight, high energy density, no pollution, no memory effect, and long service life, which is a major trend in the development of new energy batteries.

At present, the use of silicon-based materials with a higher gram capacity as a negative electrode active material has great advantages in increasing the energy density of secondary batteries. However, during charging and discharging, the silicon-based materials as the negative electrode active material has a large volume expansion and contraction issue, which is likely to cause damage to the electrode plate structure, especially when the maximum expansion occurs at full charged state, thereby deteriorating the cycling performance of the battery.

US 2016/0072125A1 discloses a secondary battery comprising a positive electrode plate, a negative electrode plate, a separator and an electrolyte, the positive electrode plate comprising a positive electrode current collector and a positive electrode film layer coated on at least one surface of the positive electrode current collector and containing a positive electrode active material, the negative electrode plate comprising a negative electrode current collector and a negative electrode film layer coated on at least one surface of the negative electrode current collector and containing a negative electrode active material, characterized in that: the positive electrode active material comprises one or more of lithium nickel cobalt manganese oxide ($LiNi_{0.8}Co_{0.1}Mn_{0.1}O_2$, paragraph 27); the negative active material comprises a silicon-based material, wherein the negative electrode film layer has a compaction density $PD_{negative}$ of 1.5 g/cm3 < $PD_{negative}$ < 1.8 g/cm3, and an apparatus comprising the secondary battery, the secondary battery being used as a power source or an energy storage unit of the apparatus.

CN109659614 discloses a secondary battery comprising a positive electrode plate, a negative electrode plate, a separator and an electrolyte, the positive electrode plate comprising a positive electrode current collector and a positive electrode film layer coated on at least one surface of the positive electrode current collector and containing a positive electrode active material, the negative electrode plate comprising a negative electrode current collector and a negative electrode film layer coated on at least one surface of the negative electrode current collector and containing a negative electrode active material, characterized in that: the positive electrode active material comprises one or more of lithium nickel cobalt manganese oxide; the negative active material comprises a silicon-based material, wherein the silicon-based material is present in the negative electrode active material in a mass percentage of 5%, and an apparatus comprising the secondary battery, the secondary battery being used as a power source or an energy storage unit of the apparatus.

EP 2824735 discloses a secondary battery comprising a positive electrode plate, a negative electrode plate, a separator and an electrolyte, the positive electrode plate comprising a positive electrode current collector and a positive electrode film layer coated on at least one surface of the positive electrode current collector and containing a positive electrode active material, the negative electrode plate comprising a negative electrode current collector and a negative electrode film layer coated on at least one surface of the negative electrode current collector and containing a negative electrode active material, characterized in that: the positive electrode active material comprises lithium nickel cobalt manganese oxide; the negative active material comprises a silicon-based material, wherein the silicon-based material is present in the negative electrode active material in a mass percentage of 2, 3, 5 and 10 %, and an apparatus comprising the secondary battery, the secondary battery being used as a power source or an energy storage unit of the apparatus.

### SUMMARY

The invention is set out in the appended claims.

The battery module, battery pack, and apparatus of the present application comprise the secondary battery provided by the present application, and thus have at least the same advantages as the secondary battery.

### BRIEF DESCRIPTION OF DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

FIG. 1 is a schematic diagram of a secondary battery according to an embodiment of the present application;
FIG. 2 is a schematic diagram of a battery module according to an embodiment of the present application;
FIG. 3 is a schematic diagram of a battery pack according to an embodiment of the present application;
FIG. 4 is an exploded view of FIG. 3;
FIG. 5 is a schematic diagram of an apparatus according to an embodiment of the present application in which the secondary battery is used as a power source.

In above figures, the reference numerals are defined as follows: 1- battery pack; 2- upper battery box; 3-lower battery box; 4-battery module; 5-secondary battery.
The features, advantages, and technical effects of the exemplary embodiments of the present application will be described below with reference to the accompanying drawings.

**DEFINITION**

In the context of this application, "a", "an", "the" as used (especially in the content of the claims) should be interpreted as covering both the singular and the plural, unless otherwise stated or clearly contradictory to the context.
Throughout the present application, where compositions are described as having, including, or comprising specific components or fractions, or where processes are described as having, including, or comprising specific process steps, it is contemplated that the compositions or processes as disclosed herein may further comprise other components or fractions or steps, whether or not, specifically mentioned in this application, as along as such components or steps do not affect the basic and novel characteristics of the present application, but it is also contemplated that the compositions or processes may consist essentially of, or consist of, the recited components or steps.
As used herein, $|(AF/AE-1)/(CE/CF-1)|$ represents the absolute value of $(AF/AE-1)/(CE/CF-1)$.
In the description herein, it should be noted that, unless otherwise stated, the recitation of numerical ranges by "above" and "below" include all numbers within that range including the endpoints. As used herein, the recitation of "more" in the phrase "one or more" includes two or more.

**DESCRIPTION OF EMBODIMENTS**

The secondary battery according to the present application will be described in detail below.
According to the present application, the secondary battery comprises a positive electrode plate, a negative electrode plate, a separator and an electrolyte, the positive electrode plate comprises a positive electrode current collector and a positive electrode film layer, the positive electrode film layer was coated on at least one surface of the positive electrode current collector and contains a positive electrode active material, the negative electrode plate comprises a negative electrode current collector and a negative electrode film layer, the negative electrode film layer was coated on at least one surface of the negative electrode current collector and contains a negative electrode active material, the positive electrode active material comprises one or more of lithium nickel cobalt manganese oxide and lithium nickel cobalt aluminum oxide; the negative active material comprises a silicon-based material; wherein the secondary battery satisfies the following formula I:

$$2 \leq |(AF/AE-1)/(CE/CF-1)| \leq 7 \text{ (Formula I)}$$

in which

CF represents a unit cell volume as measured when the positive electrode active material is prepared into a button battery and the button battery is charged to 100% SOC at a rate of 0.05C;

CE represents a unit cell volume as measured when the positive electrode active material is prepared into a button battery and the button battery is discharged to 0% SOC at a rate of 0.05C;

AF represents a volume of the negative electrode active material particles as measured when the silicon-based material is prepared into a single-particle battery, and the single-particle battery is charged to 100% SOC at a rate of 0.5C; and

AE represents a volume of the negative electrode active material particles as measured when the silicon-based material is prepared into a single-particle battery, and the single-particle battery is discharged to 0% SOC at a rate of 0.5C.

During the charging and discharging process of the secondary battery, the following electrochemical process generally occurs. During charging, the potential applied to the two electrodes of the battery forces the active compound of the positive electrode to release active ions and the released active ions are intercalated into the negative active material molecules arranged in a layered structure. During discharging, the active ions are deintercalated from the negative electrode active material and recombine with the positive electrode active compound.

As mentioned above, a secondary battery, such as a lithium ion secondary battery will undergo a significant intercalation-deintercalation of active ions during the above charging and discharging process. Therefore, there will be obvious changes of increasing and decreasing in the thickness of the electrode plate, which is the so-called "breathing effect". Especially when the negative electrode plate contains a silicon-based material with a relatively large volume expansion, this phenomenon is more obvious.

The inventor found through a lot of research that when the selected positive and negative active materials meet the above-mentioned specific conditions, the volume of the positive electrode plate can change in such a manner that it may match the change in the volume of the negative electrode plate during the charging and discharging process of the battery, which will control the overall volume change of the battery cell well, and to a large extent alleviate the adverse effects of the "breathing effect", thereby effectively improving the cycling performance of the battery.

When the value of formula I is too large, such as greater than 7, the expansion effect of the negative electrode plate is significantly larger than the contraction effect of the positive electrode plate, and the battery will expand greatly, which will cause the electrolyte inside the battery cell to be squeezed and deteriorate the cycling performance of the battery. At the same time, it easily causes the fracturing of the active material particles in the positive and negative electrode plates, and causes performance deterioration at the material level. The superposition of the two results can easily cause a significant increase of the DC internal resistance (DCR) of battery and a drastic capacity decrease during cycling. Particularly serious situations, such as lithium precipitation, may also cause thermal runaway of the battery, thereby posing safety hazards.

When the value of Formula I is too small, e.g. less than 2, the expansion effect of the negative electrode plate is significantly weaker than the contraction effect of the positive electrode. In such a situation, the contact between the positive and negative electrode plate may become worse, and there are some regions in which electrolyte distributes non-continuously, which reduces the effective reaction area, and is likely to cause lithium precipitation. In addition, the surface of the negative electrode active material has a high concentration of lithium ions at the beginning of charging, and lithium ions gradually diffuse within the entire negative electrode active material particles with battery charging. If the positive electrode shrinks significantly, it will restrain the negative electrode less during the initial stage of charging, at which the stress of the negative electrode active material particles is concentrated on the surface. Without the restraint of external force, the stress will cause the surface layer to crack and shatter and the active material to lose while a large amount of electrolyte is also consumed for a new film-forming reaction. Therefore, too big or too small value of $|(AF/AE-1)/(CE/CF-1)|$ will deteriorate the battery performance and adversely affect the battery life. Optionally, $2 \leq |(AF/AE-1)/(CE/CF-1)| \leq 4$. It should be noted that the preparation process of the "button cell" in this application can refer to national standards or industry specifications. For example, the positive electrode active material and the customary binder and conductive agent in the industry can be used to prepare electrode plates, and then small metal discs such as lithium plate or sodium plates and the like can be used as a counter electrode to prepare a button battery.

Specifically, the "button cell" can be prepared by the following steps. The selected positive electrode active material is mixed with Super P and PVDF in a certain mass ratio (which can be 92:3:5) and then dissolved in the solvent NMP to make a slurry. Then, the slurry is coated on aluminum foil, and dried to remove the solvent. The obtained plate is cut and pressed to make a round electrode plate, which is assembled with a round small lithium plate as a counter electrode into a button cell in the glove box. The electrolyte salt may be $LiPF_6$ at a concentration of 1 mol/L, and the organic solvent may be a mixture of ethylene carbonate and ethyl methyl carbonate in a volume ratio of 1:1.

It should be noted that the preparation process of the "single-particle battery" of the present application can be prepared by the following steps. Under a microscope, a complete silicon-based material particle is selected from the negative electrode active material and sandwiched by two metal lithium electrodes for fixing, which is immersed in the electrolyte in which the electrolyte salt can be $LiPF_6$ at a concentration of 1mol/L, and the organic solvent can be a mixture of ethylene carbonate and ethyl methyl carbonate in a volume ratio of 1:1) and subjected to charging and discharging tests.

In the secondary battery of the present application, optionally the positive electrode active material comprises one or more of $Li_aNi_bCo_cM_dM'_eO_fA_g$ and a coating layer modified $Li_aNi_bCo_cM_dM'_eO_fA_g$ on at least a part of surface thereof, wherein $0.8 \leq a \leq 1.2$, $0.8 \leq b < 1$, $0 < c < 1$, $0 < d < 1$, $0 \leq e \leq 0.1$, $1 \leq f \leq 2$, $0 \leq g \leq 1$, M is one or more selected from Mn and Al, M' is one or more selected from Zr, Al, Zn, Cu, Cr, Mg, Fe, V, Ti and B, and A is one or more selected from N, F, S and Cl. The use of the above-mentioned positive electrode active material enables the secondary battery higher energy density and better cycling performance.

In the secondary battery of the present application, optionally, at least a part of the positive electrode active material comprises single crystal particles. The positive electrode active material having single crystal particles can improve the overall compaction density and ductility of the positive electrode film layer, while reducing the contact area between the positive electrode active material and the electrolyte, reducing the occurrence of interface side reactions, and reducing gas production, thereby further improving the cycling performance of batteries. The use of the positive active material improves the cycling performance of the secondary battery.

In the secondary battery of the present application, optionally, the CF of the positive electrode active material satisfies: $0.096nm^3 \leq CF \leq 0.098nm^3$, more optionally $CF = 0.097nm^3$.

In the secondary battery of the present application, optionally, the CE of the positive electrode active material satisfies: $0.100nm^3 \leq CE \leq 0.102nm^3$.

In the secondary battery of the present application, optionally, the positive electrode active material satisfies: $1.0 \leq CE/CF \leq 1.05$; optionally $1.038 < CE/CF < 1.04$. The use of the positive electrode active material enables the secondary battery higher energy density and better cycling performance.

In the secondary battery of the present application, optionally, the volume average particle size Dv50 of the positive electrode active material is from 5 $\mu$m to 12 $\mu$m, more optionally from 6 $\mu$m to 10 $\mu$m. If the average particle size is too small, the specific surface area of the positive electrode active material is often larger. In such a situation, the oxidation activity becomes higher, the surface side reactions will increase, and the gas generation problem caused by the decomposition of the electrolyte is prominent. If the average particle size is too large, the diffusion path of lithium ions in the large size particles is longer, and the resistance to be overcome for diffusion is greater. Thus, the crystal deformation and volume expansion of the positive electrode active material caused by the intercalation process will continue to accumulate, so that the intercalation process will gradually become difficult to proceed. When the particle size of the positive electrode active material falls within the above-mentioned optional range, the uniformity of the positive electrode plates will be higher, which can avoid not only the deterioration of the performance of the lithium-ion battery caused by more side reactions with the electrolyte due to the too small particle size, but also the deterioration of the performance of the lithium ion battery due to the large particle size hindering the transport of lithium ions inside the particles.

In the secondary battery of the present application, optionally, the thickness T of the positive electrode film layer in a single side satisfies: $46 \mu m \leq T_{positive} \leq 56 \mu m$; more optionally, $48.5 \mu m \leq T_{positive} \leq 53.5 \mu m$. If the thickness is too large, the discharge power performance will deteriorate, and the battery power will decrease; if it is too small, the proportion of the active material will decrease, and the energy density of the battery will decrease. The use of such a positive electrode film layer can improve the electrical performance of the secondary battery.

In the secondary battery of the present application, optionally, the compaction density PD of the positive electrode film layer satisfies: $3.0 \text{ g/cm}^3 \leq PD_{positive} \leq 3.55 \text{ g/cm}^3$; more optionally, $3.4 \text{ g/cm}^3 \leq PD_{positive} \leq 3.5 \text{ g/cm}^3$. Controlling the compaction density within the range can ensure the integrity of the positive electrode active material particles and maintain good electrical contact between the particles.

In the secondary battery of the present application, the type of the positive electrode current collector is not specifically limited, and can be selected according to actual needs. For example, the positive electrode current collector can be an aluminum foil, a nickel foil or a polymer conductive film. Optionally, the positive electrode current collector is an aluminum foil.

In the secondary battery of the present application, the positive electrode film layer further includes a conductive agent and a bonding agent. The type and content of the conductive agent and the bonding agent are not specifically limited, and can be selected according to actual needs.

In the secondary battery of the present application, optionally, the silicon-based material is one or more selected from elemental silicon, silicon-oxygen compounds, silicon-carbon composites, silicon-nitrogen compounds, and silicon alloys. More desirably, the silicon-based material is selected from silicon-oxygen compounds, such as SiOx, where $0 < X < 2$. In the secondary battery of the present application, optionally, the AF/AE of the silicon-based material satisfies the following relationship: $1.05 < AF/AE < 1.30$, more optionally $1.08 < AF/AE < 1.27$, which provides a secondary battery with higher energy density and better cycling performance.

In the secondary battery of the present application, optionally, the AE of the silicon-based material satisfies: $700 \mu m^3 \leq AE \leq 1100 \mu m^3$, more optionally $800 \mu m^3 \leq AE \leq 1000 \mu m^3$.

In the secondary battery of the present application, the mass percentage of the silicon-based material in the negative electrode active material is 15%-30%. The negative electrode active material with the silicon-based material content within the above range enables the secondary battery higher energy density and better cycling performance.

In the secondary battery of the present application, the negative electrode active material further includes a carbon material. The carbon material is one or more selected from of graphite, soft carbon, and hard carbon; optionally, the carbon material is selected from graphite, and the graphite is selected one or more from artificial graphite and natural graphite. Such negative electrode active materials have improved structural stability.

In the secondary battery of the present application, optionally, the volume average particle size Dv50 of the negative electrode active material is from 10 $\mu$m to 23 $\mu$m, and more optionally, from 12 $\mu$m to 16 $\mu$m. Too small particle size may be due to the high content of silicon-based materials, the binding force between the negative electrode active material particles is weak, and the binding force between the negative electrode film and the negative electrode current collector is weaken. During use, the negative electrode film is prone to peel off, thereby causing capacity degradation. If the average particle size is too large, the diffusion path of lithium ions in the large particle size particles is longer, which makes the intercalation process slower. Thus, the average particle diameter Dv50 of the negative electrode active material falling within the above range provides a secondary battery with good electrical performance.

In the secondary battery of the present application, optionally, the thickness $T_{negative}$ of the negative electrode film in a single side satisfies: 66 $\mu$m$\leq T_{negative}\leq$86 $\mu$m; more optionally, 68.5$\mu$m$\leq T_{negative}\leq$83.5$\mu$m. If the negative electrode film is too thick, the charging polarization becomes larger, the lithium-precipitation window becomes narrower, and the performance becomes worse. In addition, the active material is likely to fall off and delaminate during the charging and discharging of the battery, which affects the cycling performance of the battery. For the thick electrodes, the migration path of lithium ions within small material particles is shorter, and the charging performance is better. At the same time, the volume change of the single particle during charging and discharging is small, and the electrode plate structure is easy to maintain. Otherwise, with large material particles, the charging performance will deteriorate and the structure is easily destroyed. If the negative electrode film is too thin, it will affect the energy density of the battery. The thickness of the negative electrode film in a single side falling within the above range can improve the electrical performance of the secondary battery.

In the secondary battery of the present application, optionally, the compaction density PD negative of the negative electrode film layer satisfies: 1.5 g/cm$^3\leq$PD $_{negative}\leq$1.8 g/cm$^3$; more optionally, 1.6 g/cm$^3$ $\leq$PD $_{negative}\leq$1.7 g/cm$^3$. Controlling the compaction density within the above range can ensure the integrity of the negative electrode active material particles and maintain good electrical contact between the particles.

In the secondary battery of the present application, the type of the negative electrode current collector is not specifically limited, and can be selected according to actual needs. For example, the negative electrode current collector can be a copper foil, a carbon-coated copper foil or a polymer conductive film. Optionally, the negative electrode current collector is a copper foil.

In the secondary battery of the present application, the negative electrode film further includes a conductive agent and a bonding agent. The type and content of the conductive agent and the bonding agent are not specifically limited, and can be selected according to actual needs.

In the secondary battery of the present application, the positive electrode film can be provided on one surface of the positive electrode current collector, or can be provided on both surfaces of the positive electrode current collector; the negative electrode film can be provided on one surface of the negative electrode current collector, or can be provided on both surfaces of the negative electrode current collector. It should be noted that when the above-mentioned positive and negative electrode films are simultaneously disposed on both surfaces of the current collector, the parameter ranges of the positive and negative electrode film given in the present application refer to the parameter ranges of the positive and negative electrode film on either side such as thickness, compaction density and the like. In addition, the thickness of the positive and negative electrode films mentioned in the present application, refers to the thickness of the positive and negative electrode plates and these plates have been cold-pressed and compacted and used to assemble the battery. In the secondary battery of the present application, the type of the separator is not specifically limited, and can be any separator material used in the existing batteries, such as polyethylene, polypropylene, polyvinylidene fluoride and their multi-layer composite film, but not limited thereto.

In the secondary battery of the present application, the electrolyte includes a lithium salt and an organic solvent, wherein the specific types and compositions of the lithium salt and the organic solvent are not specifically limited, and can be selected according to actual needs. Optionally, the lithium salt may be one or more selected from lithium hexafluorophosphate, lithium tetrafluoroborate, and lithium perchlorate, and the organic solvent may include one or more of cyclic carbonate, chain carbonate, and carboxylate ester. The electrolyte may also contain a functional additive, such as vinylene carbonate, vinyl sulfate, propane sultone, fluoroethylene carbonate and the like.

The various parameters involved in this application have general meanings known in the art, and can be measured according to methods known in the art. For example, they can be tested according to the method given in the embodiment of the present application.

The secondary battery can be prepared by a method known in the art. As an example, the positive electrode plate, the separator, and the negative electrode plate are wound (or laminated) in order, so that the separator is located between the positive electrode plate and the negative electrode plate for isolation to obtain an electrode assembly. The electrode assembly is placed in an outer package in which an electrolyte is injected and then sealed to obtain a secondary battery.

In the secondary battery of the present application, the outer package may be a hard shell (such as an aluminum shell) or a soft package (such as a bag).

The present application in a second aspect provides a battery module, comprising any one or more of the secondary battery according to the first aspect of the present application. The number of the secondary battery in the battery module can be adjusted according to the application and capacity of the battery module.

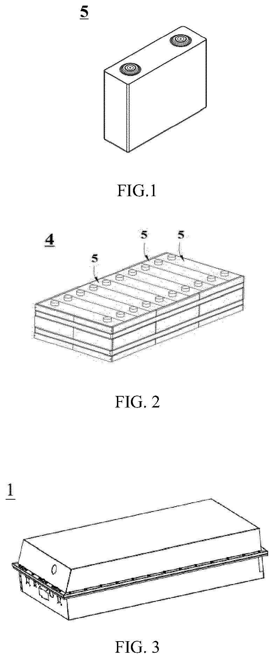

In some embodiments, referring to FIG. 2, in the battery module 4, a plurality of secondary batteries 5 are sequentially arranged along a length direction of the battery module 4. It is also possible that a plurality of secondary batteries 5 are arranged in any other manner. Further, a plurality of secondary batteries 5 can be fixed by a fastener. Optionally, the battery module 4 may further include a housing having a receiving space, in which a plurality of lithium ion batteries 5 are received.

The present application in a third aspect provides a battery pack, comprising any one or more of the battery module according to the second aspect of the present application. That is to say, the battery pack comprises any one or more of the secondary battery according to the first aspect of the present application.

The number of battery modules included in the battery pack can be adjusted according to the application and capacity of the battery pack.

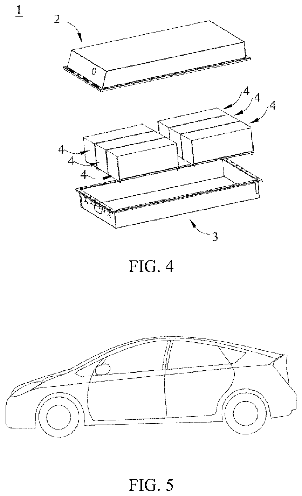

In some embodiments, with reference to FIG. 3 and FIG. 4, the battery pack 1 may include a battery box and a plurality of battery modules 4 placed in the battery box. The battery box includes an upper box 2 and a lower box 3 and the upper box 2 is arranged to cover the lower box 3, forming a closed space for receiving the battery modules 4. A plurality of battery modules 4 can be arranged in the battery box in any manner.

The present application in a fourth aspect provides an apparatus, comprising any one or more of the secondary battery according to the first aspect of the present application. The secondary battery may be used as a power source of the apparatus or as an energy storage unit of the apparatus. Optionally, the apparatus may be, but is not limited to, a mobile apparatus (such as a mobile phone, a notebook computer, and the like), an electric vehicle (such as a pure electric vehicle, a hybrid electric vehicle, a plug-in hybrid electric vehicle, an electric bicycle, an electric scooter, and an electric golf vehicles, electric trucks, and the like), electric trains, ships and satellites, energy storage systems, or the like.

For example, FIG. 5 illustrates an apparatus comprising the secondary battery of the present application. The apparatus is a pure electric vehicle, a hybrid electric vehicle, or a plug-in hybrid electric vehicle and the secondary battery of the present application is used as a power source.

## Examples

In order to make the purpose of the application, technical solutions, and beneficial technical effects of the present application clearer, the following further describes the present application in detail with reference to embodiments. However, it should be understood that the embodiments of the application are only for explaining the application, not for limiting the application, and the embodiments of the application are not limited to the embodiments given in the specification. The specific experimental conditions or operating conditions that are not specified in the examples are manufactured under conventional conditions, or manufactured under the conditions recommended by the material supplier.

### I. Preparation of batteries for testing

The batteries of Examples 1-11 and Comparative Examples 1-2 were prepared according to the following methods.

A) Preparation of positive electrode plate:

A positive electrode active material (see Table 1 for details), a conductive agent (Super P), and a bonding agentbonding agent (PVDF) were mixed in a ratio of 96:2:2, a solvent (NMP) was added. The resulting mixture was stirred under the action of a vacuum mixer until the system become uniform and transparent, and a positive electrode slurry was obtained. The positive electrode slurry was evenly applied on an aluminum foil as a positive electrode current collector. The positive electrode current collector coated with the positive electrode slurry was dried at room temperature and then transferred to an oven for drying followed by cold pressing, slitting and other processes to obtain the positive electrode plate.

B) Preparation of negative electrode plate:

A negative active material (see Table 1 for details), a conductive agent (Super P), CMC (carboxymethyl cellulose), and a bonding agent (styrene butadiene rubber) were mixed in a mass ratio of 94.5:1.5:1.5:2.5 and then mixed with a solvent (deionized water) uniformly under the action of a vacuum mixer to prepare a negative electrode slurry. The negative electrode slurry was evenly coated on the negative electrode collector copper foil. The negative electrode current collector coated with the negative electrode slurry was dried at room temperature and then transferred to an oven for drying followed by cold pressing, slitting and other processes to obtain the negative electrode plate.

C) Preparation of electrolyte:

Ethylene carbonate (EC), ethyl methyl carbonate (EMC), and diethyl carbonate (DEC) were mixed in a volume ratio of 1:1:1, and fluoroethylene carbonate (FEC) was added. After that, LiPF6 was uniformly dissolved in the above solution to obtain an electrolyte, wherein the concentration of LiPF6 was 1 mol/L, and the mass fraction of FEC in the electrolyte was 6%.

D) Separator: a polyethylene film was used.

E) Assembly of the battery:

The above-mentioned positive electrode film, separator, and negative electrode film were stacked in order, so that the separator was located between the positive electrode and negative electrode films for isolation, which was then wound to obtain an electrode assembly. The electrode assembly was placed into an outer package, in which the electrolyte prepared above was injected, thereby obtaining a lithium ion secondary battery through the steps of vacuum packaging, standing, chemical conversion, and shaping.

The preparation process of Example 2-11 and Comparative Example 1-2 were similar to that of Example 1, with the differences as shown in Table 1.

**II. Tests for positive and negative electrode active materials and positive and negative electrode films**

In the secondary battery of the present application, the parameters of the positive and negative electrode active materials and the positive and negative electrode films can be tested according to the following methods, or can be tested according to other known methods in the art, and the test results as obtained are all within the margin of error.

(1) Unit cell volume of positive electrode active material

A button battery was prepared according to the aforementioned preparation method and the prepared button battery was charged to 100% SOC at a rate of 0.05C. After that, the button battery was disassembled in the glove box for the electrode plate and the obtained electrode plate was subjected to XRD test. The cell volume was obtained by calculation, which was marked as CF. Another prepared button battery was discharged to 0% SOC at a rate of 0.05C. After that, the button battery was disassembled in the glove box for the electrode plate and the obtained electrode plate was subjected to XRD test. The cell volume was obtained by calculation, which was marked as CE.

(2) Volume of silicon-based material particles

A single-particle battery was prepared according to the aforementioned method, and then a microscope was used in situ to take pictures of several particles in the charged state and the discharged state, and the volumes in the charged state and the discharged state were calculated according to the pictures. Test 20Ea single-particle batteries separately, and average the volume expansion rate of charge and discharge.

(3) Volume average particle size Dv50 of the positive and negative electrode active materials

The average particle size Dv50 of the positive and negative electrode active materials were measured by using a laser diffraction particle size distribution measuring instrument such as Mastersizer 3000. Dv50 represents the particle size at which the positive and negative electrode active material particles reaches 50% of cumulative volume distribution percentage, i.e. an average particle size of volume distribution.

(4) The compaction density of the positive and negative electrode film in a single side

The compaction density of the positive and negative electrode films in a single side represented as PD=m/V, in which m represented the weight of the membrane, and V represented the volume of the membrane, m of the electrode film was obtained by weighing the film using an electronic balance with an accuracy of 0.01g or more and V of the electrode film was obtained by the product of the surface area of the film and the thickness of the film, where the thickness of the film was measured using a spiral micrometer with an accuracy of 0.5 μm.

III. Battery performance test

The above-mentioned Examples 1-11 and Comparative Examples 1-2 were tested for various properties according to the following methods.

Cycling performance test

At 25°C, the obtained secondary battery was charged at a constant current of 0.7C to a voltage of 4.35V, then charged at a constant voltage of 4.35V to a current of 0.05C, and afterwards discharged at a constant current of 1C to a voltage of 3.0V, which is a charge-discharge cycle process. The process was repeated for 300 times.
Capacity retention rate after 300 cycles=discharge capacity after the 300th cycle/discharge capacity after the first cycle×100%.
The above test results were shown in Table 1.

Table 1: Parameters of lithium ion secondary batteries according to Examples 1-11 and Comparative Examples 1-2 and their battery performance

| No. | Positive electrode active material | | | | Negative electrode active material | | | Formula I | Capacity retention rate after 300 cycles |
|---|---|---|---|---|---|---|---|---|---|
| | Type | CF | CE | CE/CF | Type | X | AF/AE | | |
| Example 1 | LiNi0.805 Co0.1 Mn0.095 O2 | 98 | 102 | 1.040 | SiOx: artificial graphite =25:75 | 0.8 | 1.080 | 2.0 | 95.0 |
| Example 2 | LiNi0.805 Co0.1 Mn0.095 O2 | 98 | 102 | 1.040 | SiOx: artificial graphite =25:75 | 0.84 | 1.100 | 2.5 | 95.5 |
| Example 3 | LiNi0.805 Co0.1 Mn0.095 O2 | 98 | 102 | 1.040 | SiOx: artificial graphite =25:75 | 0.88 | 1.120 | 3.0 | 96.0 |
| Example 4 | LiNi0.8 Co0.1 Mn0.1 O2 | 96 | 100 | 1.038 | SiOx: artificial graphite =25:75 | 0.92 | 1.132 | 3.5 | 96.5 |
| Example 5 | LiNi0.8 Co0.1 Mn0.1 O2 | 96 | 100 | 1.038 | SiOx: artificial graphite =25:75 | 0.96 | 1.152 | 4.0 | 97.0 |
| Example 6 | LiNi0.8 Co0.1 Mn0.1 O2 | 96 | 100 | 1.038 | SiOx: artificial graphite =25:75 | 1 | 1.152 | 4.5 | 96.4 |
| Example 7 | LiNi0.8 Co0.1 Mn0.1 O2 | 96 | 100 | 1.038 | SiOx: artificial graphite =25:75 | 1.04 | 1.185 | 5.0 | 96.3 |
| Example 8 | LiNi0.8 Co0.1 Mn0.1 O2 | 96 | 100 | 1.038 | SiOx: artificial graphite =25:75 | 1.08 | 1.210 | 5.5 | 96.0 |
| Example 9 | LiNi0.8 Co0.1 Mn0.1 O2 | 96 | 100 | 1.038 | SiOx: artificial graphite =25:75 | 1.12 | 1.230 | 6.0 | 95.7 |

(continued)

| No. | Positive electrode active material | | | | Negative electrode active material | | | Formula I | Capacity retention rate after 300 cycles |
|---|---|---|---|---|---|---|---|---|---|
| | Type | CF | CE | CE/CF | Type | X | AF/AE | | |
| Example 10 | LiNi0.8 Co0.1 Mn0.1 O2 | 96 | 100 | 1.038 | SiOx: artificial graphite =25:75 | 1.16 | 1.250 | 6.5 | 95.0 |
| Example 11 | LiNi0.8 Co0.1 Mn0.1 O2 | 96 | 100 | 1.038 | SiOx: artificial graphite =25:75 | 1.2 | 1.270 | 7.0 | 93.0 |
| Comparative Example 1 | LiNi0.8 Co0.1 M0.1 O2 | 96 | 100 | 1.038 | SiOx: artificial graphite =25:75 | 1.24 | 1.055 | 1.5 | 91.0 |
| Comparative Example 2 | LiNi0.8 Co0.1 M0.1 O2 | 96 | 100 | 1.038 | SiOx: artificial graphite =25:75 | 1.28 | 1.280 | 7.5 | 90.0 |

It can be seen from the test results in Table 1 that:
Examples 1-11 and Comparative Examples 1-2 examined the effect of |(AF/AE-1)/ (CE/CF-1)| on battery performance when a high nickel positive electrode active material was as a positive electrode active material, and a mixture of silicon-based material and graphite material was as a negative electrode active material. From the data of these Examples 1-10 and Comparative Examples 1-2, it can be seen that when $2 \leq |(AF/AE-1)/(CE/CF-1)| \leq 7$, the battery had good cycling performance. When $|(AF/AE-1)/(CE/CF-1)| > 7$ or $|(AF/AE-1)/(CE/CF-1)| < 2$, the DC impedance of the battery was greatly increased, and the cycling performance was significantly reduced, as shown in Comparative Examples 1 and 2. Therefore, in order to ensure the electrical performance of batteries, especially the DC impedance and cycling performance of batteries, it was necessary to ensure that $2 \leq |(AF/AE-1)/(CE/CF-1)| \leq 7$, and the best performance was obtained.

Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

Based on the application and teaching of the foregoing specification, those skilled in the art can also make changes and modifications to the foregoing embodiments. The scope of the invention is defined as set out in the appended claims.

**Claims**

1. A secondary battery (5) comprising a positive electrode plate, a negative electrode plate, a separator and an electrolyte, the positive electrode plate comprising a positive electrode current collector and a positive electrode film layer coated on at least one surface of the positive electrode current collector and containing a positive electrode active material, the negative electrode plate comprising a negative electrode current collector and a negative electrode film layer coated on at least one surface of the negative electrode current collector and containing a negative electrode active material, **characterized in that**:

the positive electrode active material comprises one or more of lithium nickel cobalt manganese oxide and lithium nickel cobalt aluminum oxide;

the negative active material comprises a silicon-based material; and

the secondary battery satisfies the following formula I:

$$2 \leq |(AF/AE-1)/(CE/CF-1)| \leq 7 \text{ (Formula I)}$$

in which

CF represents a unit cell volume as measured when the positive electrode active material is prepared into a button battery and the button battery is charged to 100% SOC at a rate of 0.05C;

CE represents a unit cell volume as measured when the positive electrode active material is prepared into a button battery and the button battery is discharged to 0% SOC at a rate of 0.05C;

AF represents a volume of the negative electrode active material particles as measured when the silicon-based material is prepared into a single-particle battery, and the single-particle battery is charged to 100% SOC at a rate of 0.5C; and

AE represents a volume of the negative electrode active material particles as measured when the silicon-based material is prepared into a single-particle battery, and the single-particle battery is discharged to 0% SOC at a rate of 0.5C;

wherein the silicon-based material is present in the negative electrode active material in a mass percentage of 15% to 30%.

2. The secondary battery (5) according to claim 1, wherein the positive electrode active material comprises one or more of $Li_aNi_bCo_cM_dM'_eO_fA_g$ and modified $Li_aNi_bCo_cM_dM'_eO_fA_g$ with a coating layer on at least a part of surface thereof, wherein $0.8 \leq a \leq 1.2$, $0.8 \leq b <1$, $0 <c <1$, $0 <d <1$, $0 \leq e \leq 0.1$, $1 \leq f \leq 2$, $0 \leq g \leq 1$, M is one or more selected from Mn and Al, M' is one or more selected from Zr, Al, Zn, Cu, Cr, Mg, Fe, V, Ti and B, and A is one or more selected from N, F, S and Cl.

3. The secondary battery (5) according to any one of claims 1 to 2, wherein the positive electrode active material satisfies: $1.0 \leq CE/CF \leq 1.05$.

4. The secondary battery (5) according to any one of claims 1 to 2, wherein the positive electrode active material satisfies: $1.038 \leq CE/CF \leq 1.04$.

5. The secondary battery (5) according to any one of claims 1-4, wherein the negative electrode active material satisfies: $1.05 \leq AF/AE \leq 1.30$.

6. The secondary battery (5) according to any one of claims 1-4, wherein the negative electrode active material satisfies: $1.08 \leq AF/AE \leq 1.27$.

7. The secondary battery (5) according to any one of claims 1-6, wherein the negative active material further comprises a carbon material, and the carbon material comprises one or more of artificial graphite, natural graphite, soft carbon, and hard carbon.

8. The secondary battery (5) according to claims 1-7, wherein the negative active material has an average particle size Dv50 in the range of 10 $\mu$m to 23 $\mu$m, as determined by a laser diffraction particle size distribution measuring instrument.

9. The secondary battery (5) according to any one of claims 1-8, wherein at least a part of the positive electrode active material is a single crystal particle.

10. The secondary battery (5) according to any one of claims 1-9, wherein the positive electrode film layer in a single side has a thickness Tc satisfying $46\mu m \leq Tc \leq 56\mu m$; and/or, the negative electrode film layer in a single side has a thickness Ta satisfying $66\mu m \leq Ta \leq 86\mu m$.

11. The secondary battery (5) according to any one of claims 1-10, wherein the positive electrode film layer has a compaction density PD $_{positive}$ satisfying: $3.0 \text{ g/cm}^3 \leq PD _{positive} \leq 3.55 \text{ g/cm}^3$; and/or, the negative electrode film layer has a compaction density PD $_{negative}$ satisfies: 1.5 g/cm$^3 \leq$ PD $_{negative} \leq$ 1.8 g/cm$^3$.

12. A battery module, **characterized by** comprising the secondary battery (5) according to any one of claims 1-11.

13. A battery pack, comprising the battery module according to claim 12.

14. An apparatus, comprising the secondary battery (5) according to any one of claims 1-11, the secondary battery being used as a power source or an energy storage unit of the apparatus.

**Patentansprüche**

1. Sekundärbatterie (5), umfassend eine positive Elektrodenplatte, eine negative Elektrodenplatte, einen Separator und einen Elektrolyten, wobei die positive Elektrodenplatte einen Positivelektrodenstromkollektor und eine Positivelektrodenfilmschicht umfasst, die auf mindestens eine Oberfläche des Positivelektrodenstromkollektors aufgetragen ist und ein Positivelektrodenaktivmaterial enthält, wobei die negative Elektrodenplatte einen Negativelektrodenstromkollektor und eine Negativelektrodenfilmschicht umfasst, die auf mindestens eine Oberfläche des Negativelektrodenstromkollektors aufgetragen ist und ein Negativelektrodenaktivmaterial enthält, **dadurch gekennzeichnet, dass**:

   das Positivelektrodenaktivmaterial eines oder mehrere von Lithium-Nickel-Kobalt-Manganoxid und Lithium-Nickel-Kobalt-Aluminiumoxid umfasst;
   das Negativelektrodenaktivmaterial ein Material auf Siliziumbasis umfasst; und
   die Sekundärbatterie die folgende Formel I erfüllt:

$$2 \leq |(AF/AE\text{-}1)/(CE/CF\text{-}1)| \leq 7 \text{ (Formel I)}$$

   in welchem

   CF ein Einheitszellenvolumen darstellt, wie es gemessen wird, wenn das Positivelektrodenaktivmaterial zu einer Knopfbatterie verarbeitet wird und die Knopfbatterie mit einer Rate von 0,05C auf 100% SOC geladen wird;
   CE ein Einheitszellenvolumen darstellt, wie es gemessen wird, wenn das Positivelektrodenaktivmaterial zu einer Knopfbatterie vorbereitet wird und die Knopfbatterie mit einer Rate von 0,05C auf 0% SOC entladen wird;
   AF ein Volumen der Negativelektrodenaktivmaterialpartikel darstellt, wie es gemessen wird, wenn das Material auf Siliziumbasis zu einer Einzelpartikelbatterie vorbereitet wird und die Einzelpartikelbatterie mit einer Rate von 0,5C auf 100% SOC geladen wird; und
   AE ein Volumen der Negativelektrodenaktivmaterialpartikel darstellt, wie es gemessen wird, wenn das Material auf Siliziumbasis zu einer Einzelpartikelbatterie vorbereitet wird und die Einzelpartikelbatterie mit einer Rate von 0,5C auf 0% SOC entladen wird;
   wobei das Material auf Siliziumbasis in dem Negativelektrodenaktivmaterial in einem Massenprozentsatz von 15% bis 30% vorhanden ist.

2. Sekundärbatterie (5) nach Anspruch 1, wobei das Positivelektrodenaktivmaterial eines oder mehrere von $Li_aNi_b$-$Co_cM_dM'_eO_fA_g$ und modifiziertem $Li_aNi_bCo_cM_dM'_eO_fA_g$ mit einer Beschichtung auf mindestens einem Teil der Oberfläche davon umfasst, wobei $0,8 \leq a \leq 1,2$. $0,8 \leq b < 1$, $0 < c < 1$, $0 < d < 1$, $0 \leq e \leq 0,1$, $1 \leq f \leq 2$, $0 \leq g \leq 1$, M eines oder mehrere aus Mn und Al ausgewählt ist, M' eines oder mehrere aus Zr, Al, Zn, Cu, Cr, Mg, Fe, V, Ti und B ausgewählt ist, und A eines oder mehrere aus N, F, S und Cl ausgewählt ist.

3. Sekundärbatterie (5) nach einem der Ansprüche 1 bis 2, wobei das Positivelektrodenaktivmaterial erfüllt: $1,0 \leq CE/CF \leq 1,05$.

4. Sekundärbatterie (5) nach einem der Ansprüche 1 bis 2, wobei das Positivelektrodenaktivmaterial erfüllt: $1,038 \leq CE/CF \leq 1,04$.

5. Sekundärbatterie (5) nach einem der Ansprüche 1-4, wobei das Negativelektrodenaktivmaterial erfüllt:

1,05≤AF/AE≤1,30.

6. Sekundärbatterie (5) nach einem der Ansprüche 1-4, wobei das Negativelektrodenaktivmaterial erfüllt: 1,08≤AF/AE≤1,27.

7. Sekundärbatterie (5) nach einem der Ansprüche 1-6, wobei das Negativaktivmaterial ferner ein Kohlenstoffmaterial umfasst und das Kohlenstoffmaterial eines oder mehrere von künstlichem Graphit, natürlichem Graphit, weichem Kohlenstoff und hartem Kohlenstoff umfasst.

8. Sekundärbatterie (5) nach den Ansprüchen 1-7, wobei das Negativaktivmaterial eine durchschnittliche Teilchengröße Dv50 im Bereich von 10 μm bis 23 μm aufweist, wie durch ein Laserbeugungs-Teilchengrößenverteilungsmeßgerät bestimmt.

9. Sekundärbatterie (5) nach einem der Ansprüche 1-8, wobei zumindest ein Teil des Negativelektrodenaktivmaterials ein Einkristallpartikel ist.

10. Sekundärbatterie (5) nach einem der Ansprüche 1-9, wobei die Positivelektrodenfilmschicht auf einer einzelnen Seite eine Dicke Tc aufweist, die 46 μm ≤ Tc ≤ 56 μm erfüllt; und/oder die Negativelektrodenfilmschicht auf einer einzelnen Seite eine Dicke Ta aufweist, die 66 μm ≤ Ta ≤ 86 μm erfüllt.

11. Sekundärbatterie (5) nach einem der Ansprüche 1-10, wobei das Positivelektrodenfilmschicht eine Verdichtungsdichte PD $_{positive}$ aufweist, die Folgendes erfüllt: 3,0 g/cm$^3$ ≤ PD $_{positive}$ ≤ 3,55 g/cm$^3$; und/oder die Negativelektrodenfilmschicht eine Verdichtungsdichte PD $_{negative}$ aufweist, die erfüllt: 1,5 g/cm$^3$ ≤ PD $_{negative}$ ≤1,8 g/cm$^3$.

12. Batteriemodul, **dadurch gekennzeichnet, dass** es die Sekundärbatterie (5) nach einem der Ansprüche 1-11 umfasst.

13. Batteriepack, umfassend das Batteriemodul nach Anspruch 12.

14. Vorrichtung, umfassend die Sekundärbatterie (5) nach einem der Ansprüche 1-11, wobei die Sekundärbatterie als Stromquelle oder Energiespeichereinheit der Vorrichtung verwendet wird.

**Revendications**

1. Batterie secondaire (5), comprenant une plaque d'électrode positive, une plaque d'électrode négative, un séparateur et un électrolyte, la plaque d'électrode positive comprenant un collecteur de courant d'électrode positive et une couche de film d'électrode positive appliquée sur au moins une surface du collecteur de courant d'électrode positive et comprenant un matériau actif d'électrode positive, la plaque d'électrode négative comprenant un collecteur de courant d'électrode négative et une couche de film d'électrode négative appliquée sur au moins une surface du collecteur de courant d'électrode négative et comprenant un matériau actif d'électrode négative, **caractérisée en ce que**,

le matériau actif d'électrode positive comprend un ou plusieurs parmi des oxydes de lithium nickel cobalt manganèse et des oxydes de lithium nickel cobalt aluminium ;
le matériau actif négatif comprend un matériau à base de silicium ; et
la batterie secondaire satisfait la formule I suivante :

$$2 \leq |(AF/AE-1)/(CE/CF-1)| \leq 7 \text{ (Formule I)}$$

dans laquelle,

CF représente un volume de cellule unitaire mesuré lorsque le matériau actif d'électrode positive est préparé dans une pile bouton et que la pile bouton est rechargée à 100% SOC à un taux de 0,05C ;
CE représente un volume de cellule unitaire mesuré lorsque le matériau actif d'électrode positive est préparé dans une pile bouton et que la pile bouton est déchargée à 0% SOC à un taux de 0,05C ;
AF représente un volume de particules du matériau actif d'électrode négative mesuré lorsque le matériau à base de silicium est préparé dans une pile à une seule particule et que la pile à une seule particule est rechargée à 100% SOC à un taux de 0,5 C ; et

AE représente un volume de particules du matériau actif d'électrode négative mesuré lorsque le matériau à base de silicium est préparé dans une pile à une seule particule et que la pile à une seule particule est déchargée à 0% SOC à un taux de 0,5 C ;

dans laquelle le matériau à base de silicium représente un pourcentage en masse de 15% à 30% dans le matériau actif d'électrode négative.

2. Batterie secondaire (5) selon la revendication 1, dans laquelle le matériau actif d'électrode positive comprend un ou plusieurs parmi $Li_aNi_bCo_cM_dM'_eO_fA_g$ et $Li_aNi_bCo_cM_dM'_eO_fA_g$ modifié avec une couche de revêtement sur au moins une partie de la surface de celui-ci, dans laquelle $0,8{\leq}a{\leq}1,2$, $0,8{\leq}b{<}1$, $0{<}c{<}1$, $0{<}d{<}1$, $0{\leq}e{\leq}0,1$, $1{\leq}f{\leq}2$, $0{\leq}g{\leq}1$, M est un ou plusieurs choisis parmi Mn et Al, M'est un ou plusieurs choisis parmi Zr, Al, Zn, Cu, Cr, Mg, Fe, V, Ti et B, et A est un ou plusieurs choisis parmi N, F, S et Cl.

3. Batterie secondaire (5) selon l'une quelconque des revendications 1 à 2, dans laquelle le matériau actif d'électrode positive satisfait : $1,0{\leq}CE/CF{\leq}1,05$.

4. Batterie secondaire (5) selon l'une quelconque des revendications 1 à 2, dans laquelle le matériau actif d'électrode positive satisfait : $1,038{\leq}CE/CF{\leq}1,04$.

5. Batterie secondaire (5) selon l'une quelconque des revendications 1 à 4, dans laquelle le matériau actif d'électrode négative satisfait : $1,05{\leq}AF/AE{\leq}1,30$.

6. Batterie secondaire (5) selon l'une quelconque des revendications 1 à 4, dans laquelle le matériau actif d'électrode négative satisfait : $1,08{\leq}AF/AE{\leq}1,27$.

7. Batterie secondaire (5) selon l'une quelconque des revendications 1 à 6, dans laquelle le matériau actif négatif comprend en outre un matériau carboné, le matériau carboné comprenant un ou plusieurs parmi le graphite artificiel, le graphite naturel, le carbone mou et le carbone dur.

8. Batterie secondaire (5) selon les revendications 1 à 7, dans laquelle le matériau actif négatif présente une taille moyenne des particules Dv50 comprise dans une plage de 10 $\mu$m à 23 $\mu$m, déterminée en utilisant un instrument de mesure de distribution granulométrique par diffraction laser.

9. Batterie secondaire (5) selon l'une quelconque des revendications 1 à 8, dans laquelle au moins une partie du matériau actif d'électrode positive est une particule monocristalline.

10. Batterie secondaire (5) selon l'une quelconque des revendications 1 à 9, dans laquelle la couche de film d'électrode positive sur un seul côté présente une épaisseur Tc satisfaisant 46 $\mu$m${\leq}$Tc${\leq}$56 $\mu$m ; et/ou, la couche de film d'électrode négative sur un seul côté présente une épaisseur Ta satisfaisant 66 $\mu$m${\leq}$Ta${\leq}$86 $\mu$m.

11. Batterie secondaire (5) selon l'une quelconque des revendications 1 à 10, dans laquelle la couche de film d'électrode positive présente une densité tassée $PD_{positive}$ satisfaisant : $3,0$ g/cm$^3{\leq}PD_{positive}{\leq}3,55$ g/cm$^3$ ; et/ou, la couche de film d'électrode négative présente une densité tassée $PD_{négative}$ satisfaisant : $1,5$ g/cm$^3{\leq}PD_{négative}{\leq}1,8$ g/cm$^3$.

12. Module de batterie, **caractérisé en ce qu'**il comprend la batterie secondaire (5) selon l'une quelconque des revendications 1 à 11.

13. Bloc de batteries, comprenant le module de batterie selon la revendication 12.

14. Dispositif, comprenant la batterie secondaire (5) selon l'une quelconque des revendications 1 à 11, la batterie secondaire étant utilisée en tant que source d'alimentation ou unité de stockage d'énergie du dispositif.

FIG.1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160072125 A1
- CN 109659614
- EP 2824735 A